# EUROPEAN PATENT APPLICATION

(11) **EP 2 058 755 A1**
(43) Date of publication of application: **13.05.2009**
(21) Application number: 08253527.9
(22) Date of filing: 29.10.2008
(51) Int. Cl.: G06Q 10/00

(54) **Method and apparatus for real time generation of charter flights**

(30) Priority: 02.11.2007 US 934160
(71) Applicant: THE BOEING COMPANY, Chicago, IL 60606-2016 (US)
(72) Inventor: Ellerbrock, Richard W., Highlands Ranch, CO 80129 (US); Schoeman, David L., Centennial, CO 80122 (US)
(74) Representative: McLeish, Nicholas Alistair Maxwell

(57) **Abstract**

A computer implemented method, apparatus, and computer program product for managing charter flights. Current status is monitored for a plurality of aircraft including any aircraft currently in-flight. In response to receiving a request from a requestor for service from a departure location to an arrival location, a set of flights from the departure location to the arrival location is identified using the current status of the plurality of aircraft to form a set of potential flight choices. A cost analysis is performed on the set of potential flight choices to form a set cost results. A portion of the set of potential flight choices is selected based on the set of cost results to form a set of planned flights. The set of planned flights is presented to the requestor.

## Description

### BACKGROUND INFORMATION

### 1. Field:

The present disclosure relates generally to an improved data processing system and a particular method and apparatus for arranging aircraft transportation. Still more particularly, the present disclosure relates to a computer implemented, apparatus, and computer program product for generating charter flights.

### 2. Background:

Commercial carriers typically offer flights in the form of scheduled flights. A scheduled flight is a flight that is operated based on any fixed or variable published schedule. With these types of flights, departure and arrival times and dates are published, and passengers are able to buy a seat reservation for a given scheduled flight.

Another system for flying involves charter flights. With charter flights, a flight is bought specifically to meet customer demand. A charter operator fills a customer request for a flight based on customer schedules and times rather than publishing their own schedules and times. With these types of flights, the customer may often be late and the flight is held, or a customer may change plans enroute with those flight changes being accommodated by the charter operator.

With charter flights, while a flight plan is filed, the customer is essentially renting the plane and crew for a given time and paying by the hour of flight time plus other costs or fees. These other costs or fees may include, for example, a deadhead return flight in which no passengers are present, or idle time at the airport when the plane and crew waits for a return trip by the customer.

Charter flights present increased flexibility to customers as compared to using traditional commercial flights. Charter flights, however, are usually more costly than commercial flights on a per seat basis because customers may be required to charter the entire plane. With the introduction and use of very light jets, lower cost options are now present as compared to traditional charter flights.

Even with the introduction of very light jets, charter operators still face challenges in maximizing seat occupancy for charter flights. Various solutions have been used to try to increase utilization of charter aircraft. For example, some charter operators provide one way pricing for charter flights. If a customer charters a flight from a first city to a second city without a return flight, the charter operators may have an open flight where the customer pays for a return flight with no passengers. This open flight is also referred to as a deadhead flight or leg.

In efforts to increase utilization of charter aircraft, some charter aircraft operators encourage ride sharing in which different customers may share an aircraft traveling from the same departure to the same destination location ,or some part thereof, or sell discounted flights where a deadhead flight leg would otherwise be flown.

Therefore, it would be advantageous to have a computer implemented method, apparatus, and computer program code for solving the above described problems with respect to charter flights.

### SUMMARY

The advantageous embodiments provide a computer implemented method, apparatus, and computer program product for managing deadhead charter flight legs. In one advantageous embodiment, a computer implemented method monitors a current status for a plurality of aircraft from multiple charter operators including any aircraft currently in-flight. In response to receiving a request from a requestor for service from a departure location to an arrival location (or dynamically from/to an appropriate nearby departure or arrival location), a set of flights from the departure location to the arrival location is identified using the current status of the plurality of available, or soon to be available, aircraft to form a set of potential flight choices. A cost analysis is performed on the set of potential flight choices to form a set of cost results. A portion of the set of potential flight choices is selected based on the set of cost results to form a set of planned flights. The set of planned flights is presented to the requestor.

In another advantageous embodiment, an apparatus comprises a request system, a flight tracking system, a route generator, and a cost analysis system. The request system is capable of receiving flight requests, and the flight tracking system is capable of real time monitoring of the status for a plurality of aircraft. The route generator is capable of generating a set of new routes for a portion of the plurality of aircraft based on current aircraft status and a set of received flight requests to form a set of generated routes. The cost analysis system is capable of determining a cost status for each of the set of generated routes.

In yet another advantageous embodiment, a computer program product comprises a computer recordable medium and program code. The program code includes code for monitoring a current status for a plurality of aircraft including any aircraft currently in-flight. The program code also includes code, responsive to receiving a request from a requestor for service from a departure location to an arrival location, for identifying a set of flights from the departure location to the arrival location using the current status of the plurality of aircraft to form a set of potential flight choices. The program code has code for performing a cost analysis on the set of potential flight choices to form a set of cost results and code for selecting a portion of the set of potential flight choices based on the set of cost results to form a set of planned flights. The program code includes code for presenting the set of planned flights to the requestor.

The features, functions, and advantages can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the advantageous embodiments are set forth in the appended claims. The advantageous embodiments, however, as well as a preferred mode of use, further objectives and advantages thereof, will best be understood by reference to the following detailed description of an advantageous embodiment of the present disclosure when read in conjunction with the accompanying drawings, wherein:
**Figure 1** is a pictorial representation of a network of data processing systems in which the advantageous embodiments of the present invention may be implemented;
**Figure 2** is a diagram of a data processing system in accordance with an advantageous embodiment;
**Figure 3** is a diagram illustrating a charter flight management environment in accordance with an advantageous embodiment;
**Figure 4** is a diagram of a charter service in accordance with an advantageous embodiment;
**Figure 5** is a diagram illustrating an operation of a charter flight management environment in accordance with an advantageous embodiment;
**Figure 6** is a diagram illustrating processing of a charter flight using a charter flight management environment in accordance with an advantageous embodiment;
**Figure 7** is an example of minor re-positioning to schedule a charter flight in accordance with an advantageous embodiment;
**Figure 8** is a diagram of a record in a flight database in accordance with an advantageous embodiment;
**Figure 9** is a diagram of a record for a user profile in accordance with an advantageous embodiment;
**Figure 10** is a record illustrating an example of information that may be entered by a user requesting a flight in accordance with an advantageous embodiment;
**Figure 11** is a diagram of a record comprising aircraft information in accordance with an advantageous embodiment;
**Figure 12** is a high level flowchart of a process for managing charter flights in accordance with an advantageous embodiment;
**Figure 13** is a flowchart of a process for requesting a flight in accordance with an advantageous embodiment;
**Figure 14** is a flowchart of a process for identifying potential flight choices to generate a set of planned flights in accordance with an advantageous embodiment; and
**Figure 15** is a flowchart of a process for scheduling a selected planned flight in accordance with an advantageous embodiment.

### DETAILED DESCRIPTION

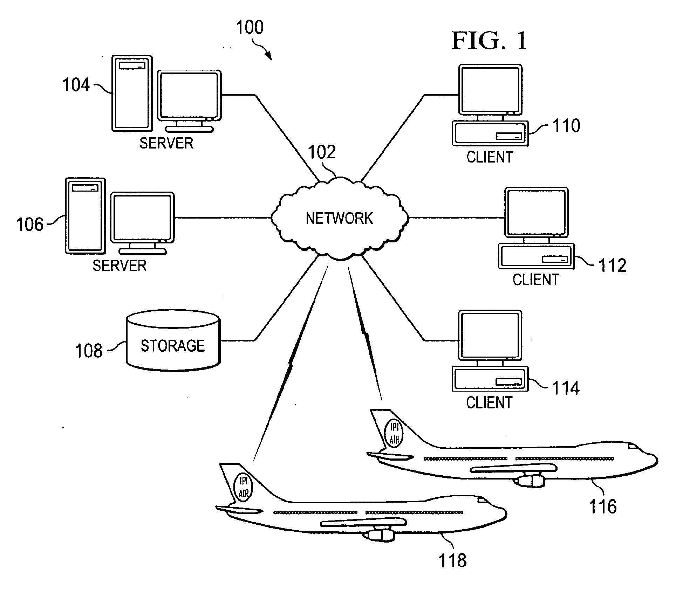

With reference now to the figures and in particular with reference to **Figures 1-2**, exemplary diagrams of data processing environments are provided in which the advantageous embodiments of the present invention may be implemented. It should be appreciated that **Figures 1-2** are only exemplary and are not intended to assert or imply any limitation with regard to the environments in which different embodiments may be implemented. Many modifications to the depicted environments may be made.

With reference now to the figures, **Figure 1** depicts a pictorial representation of a network of data processing systems in which the advantageous embodiments of the present invention may be implemented. Network data processing system **100** is a network of computers in which embodiments may be implemented. Network data processing system **100** contains network **102**, which is the medium used to provide communications links between various devices and computers connected together within network data processing system **100**. Network **102** may include connections, such as wire, wireless communication links, or fiber optic cables.

In the depicted example, server **104** and server **106** connect to network **102** along with storage unit 108. In addition, clients **110, 112**, and **114** connect to network **102**. These clients **110, 112**, and **114** may be, for example, personal computers or network computers. In the depicted example, server **104** provides data, such as boot files, operating system images, and applications to clients **110, 112,** and **114.** Clients **110, 112,** and **114** are clients to server **104** in this example. Aircraft **116** also is a client that may exchange information with clients **110, 112,** and **114.** Aircraft **116** also may exchange information with servers **104** and **106.** Aircraft **116** may exchange data with different computers through a wireless communications link while in-flight or any other type of communications link while on the ground. In these examples, server **104,** server **106,** client **110,** client **112,** and client **114** may be computers

In these examples, aircraft **116** and aircraft **118** may be aircraft that belong to a set of charter operators. The different advantageous embodiments may be implemented in network data processing system **100** to provide generation of charter flights for aircraft, such as aircraft **116** and aircraft **118**. In these examples, the generation of flights may be performed in a real time manner taking into account the current location of the aircrafts on the ground and in the air.

Network data processing system **100** may include additional servers, clients, and other devices not shown. In the depicted example, network data processing system **100** is the Internet with network **102** representing a worldwide collection of networks and gateways that use the Transmission Control Protocol/Internet Protocol (TCP/IP) suite of protocols to communicate with one another. Of course, network data processing system **100** also may be implemented as a number of different types of networks, such as for example, an intranet, a local area network (LAN), or a wide area network (WAN). **Figure 1** is intended as an example, and not as an architectural limitation for different embodiments.

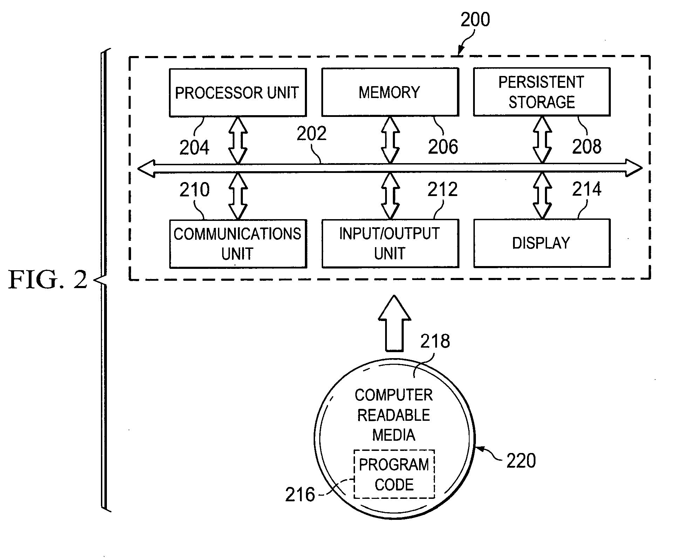

Turning now to **Figure 2**, a diagram of a data processing system is depicted in accordance with an advantageous embodiment. Data processing system **200** is an example of a data processing system that may be used to implement servers and clients, such as server **104** and client **110**. Further, data processing system **200** is an example of a data processing system that may be found in aircraft **116** in **Figure 1**.

In this illustrative example, data processing system **200** includes communications fabric **202**, which provides communications between processor unit **204,** memory **206,** persistent storage **208,** communications unit **210,** input/output (I/O) unit **212,** and display **214.**

Processor unit **204** serves to execute instructions for software that may be loaded into memory **206**. Processor unit **204** may be a set of one or more processors or may be a multi-processor core, depending on the particular implementation. Further, processor unit **204** may be implemented using one or more heterogeneous processor systems in which a main processor is present with secondary processors on a single chip. As another illustrative example, processor unit **204** may be a symmetric multi-processor system containing multiple processors of the same type.

Memory **206,** in these examples, may be, for example, a random access memory or any other suitable volatile or non-volatile storage device. Persistent storage **208** may take various forms depending on the particular implementation. For example, persistent storage **208** may contain one or more components or devices. For example, persistent storage **208** may be a hard drive, a flash memory, a rewritable optical disk, a rewritable magnetic tape, or some combination of the above. The media used by persistent storage **208** also may be removable. For example, a removable hard drive may be used for persistent storage **208.**

Communications unit **210,** in these examples, provides for communications with other data processing systems or devices. In these examples, communications unit **210** is a network interface card. Communications unit **210** may provide communications through the use of either or both physical and wireless communications links.

Input/output unit **212** allows for input and output of data with other devices that may be connected to data processing system **200.** For example, input/output unit **212** may provide a connection for user input through a keyboard and mouse. Further, input/output unit **212** may send output to a printer. Display **214** provides a mechanism to display information to a user.

Instructions for the operating system and applications or programs are located on persistent storage **208.** These instructions may be loaded into memory **206** for execution by processor unit **204.** The processes of the different embodiments may be performed by processor unit **204** using computer implemented instructions, which may be located in a memory, such as memory **206.** These instructions are referred to as, program code, computer usable program code, or computer readable program code that may be read and executed by a processor in processor unit **204.** The program code in the different embodiments may be embodied on different physical or tangible computer readable media, such as memory **206** or persistent storage **208.**

Program code **216** is located in a functional form on computer readable media **218** and may be loaded onto or transferred to data processing system **200** for execution by processor unit **204**. Program code **216** and computer readable media 218 form computer program product **220** in these examples. In one example, computer readable media **218** may be in a tangible form, such as, for example, an optical or magnetic disc that is inserted or placed into a drive or other device that is part of persistent storage **208** for transfer onto a storage device, such as a hard drive that is part of persistent storage **208.** In a tangible form, computer readable media **218** also may take the form of a persistent storage, such as a hard drive or a flash memory that is connected to data processing system **200.** The tangible form of computer readable media **218** is also referred to as computer recordable storage media.

Alternatively, program code **216** may be transferred to data processing system **200** from computer readable media **218** through a communications link to communications unit **210** and/or through a connection to input/output unit **212**. The communications link and/or the connection may be physical or wireless in the illustrative examples. The computer readable media also may take the form of non-tangible media, such as communications links or wireless transmissions containing the program code.

The different components illustrated for data processing system **200** are not meant to provide architectural limitations to the manner in which different embodiments may be implemented. The different illustrative embodiments may be implemented in a data processing system including components in addition to or in place of those illustrated for data processing system **200**. Other components shown in **Figure 2** can be varied from the illustrative examples shown.

For example, a bus system may be used to implement communications fabric **202** and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory **206** or a cache such as found in an interface and memory controller hub that may be present in communications fabric **202.**

The different advantageous embodiments recognize that existing flight generation systems match a request to propose a flight leg or an existing reservation. This type of process has an incremental value in boosting utilization rates of charter aircraft. The different advantageous embodiments also recognize that an opportunity exists to increase utilization rates even higher by changing the entire flow or interaction between customers who desire service and charter operators who provide the service.

Using the different advantageous embodiments to generate charter flights on a dynamic basis, charter operators may make adjustments to scheduled flights and perform simple add on of passengers for ride shares. Additionally, new flight legs may be created to best meet the needs of customers requiring service.

The different advantageous embodiments provide a computer implemented method, apparatus, and computer program product for managing charter flights. A current status for aircraft is monitored including those currently in flight. In response to receiving a request from a requester for service from a departure location to an arrival location, a set of aircraft potentially available to fly a route from the departure location to the arrival location are identified to form a set of potential flight choices.

A cost analysis of the set of potential flight choices are performed to form a set of cost results. A portion of the set of potential flight choices are selected based on the set of results to form a set of planned flights. These planned flights are presented to the requester. In this manner, the requester may select a particular flight and schedule the planned flight to become a charter flight.

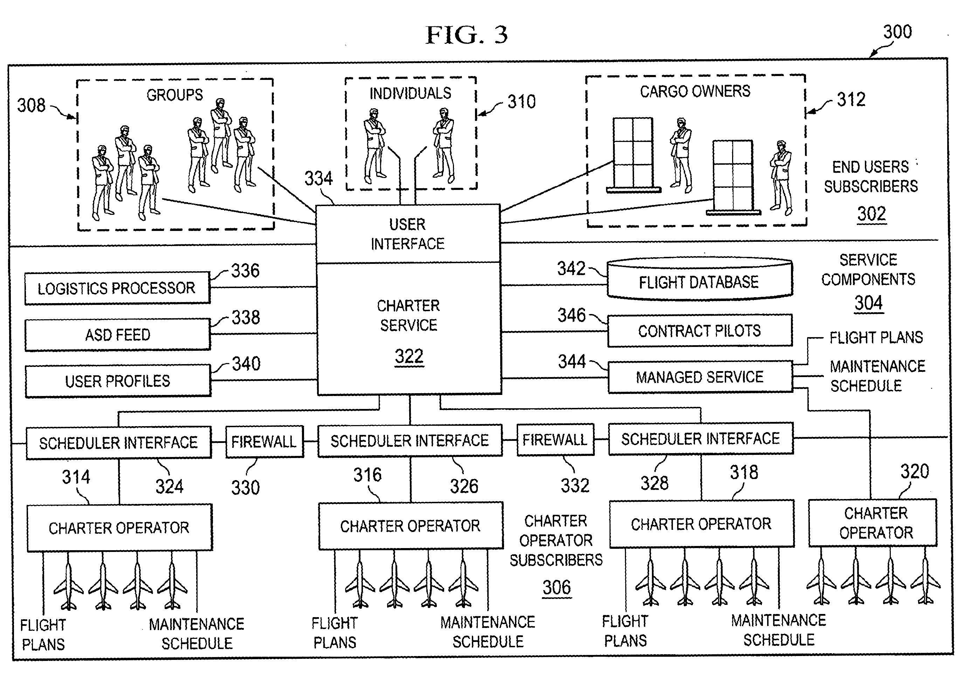

With reference now to **Figure 3**, a diagram illustrating a charter flight management environment is depicted in accordance with an advantageous embodiment. In this example, charter flight management environment **300** is an example of an environment that may be implemented using network data processing system **100** in **Figure 1**. As illustrated, charter flight management environment **300** includes end user subscribers **302,** service components **304** and charter operator subscribers **306.**

End user subscribers **302** include groups **308,** individuals **310,** and cargo owners **312.** Individuals **310** include single passengers who desire charter service. Groups **308** are groups of people who require charter service. Groups **308** typically charter a portion or an entire aircraft. Cargo owners **312** are organizations or people who require charter services to transport cargo.

Charter operator subscribers **306** include charter operator **314**, charter operator **316,** charter operator **318,** and charter operator **320.** In these examples, charter operators **314, 316,** and **318** are standard charter operators. These types of charter operators subscribe to services providing my charter flight management environment **300** to increase revenue through additional utilization of aircraft and/or pilot assets. Charter operator **320** in this example is a managed charter operator subscriber. This type of charter operator is similar to a standard charter operator subscriber. These types of charter operator, however, also utilize or subscribe to additional services, such as flight planning and maintenance services.

In these examples, charter flight management environment **300** provides an ability to identify and offer potential flight choices from multiple charter operators in charter operator subscribers 306. This type of environment provides more choices to potential charter flight passengers than is presently available.

Service components **304** include charter service components **322,** scheduler interface **324,** scheduler interface **326,** scheduler interface **328,** firewall **330,** firewall **332,** user interface **334,** logistics processor **336,** aircraft situation display (ASD) feed **338,** user profiles **340,** database **342,** managed service **344,** and contract pilots **346.** Charter service **322** and logistics processor **336** are software components that may be implemented in a data processing system, such as data processing system **200** in **Figure 2**.

Charter service **322** provides optimized match up between customers and end user subscribers **302** and available charter aircraft. Charter service **322** receives requests from customers in end user subscribers **302** through user interface **334.** Available options are presented by charter service **322** through user interface **334** to customers. Desired options may be selected and confirmation of charter flights may be performed using charter service **322**. The different software components illustrated in service components **304** may be located on a data processing system, such as data processing system **200** in **Figure 2**. The different components may be implemented on the same or different data processing systems depending on the particular implementation.

Logistics processor **336** acts as a route generator and identifies potential flight choices based on various parameters. These parameters include, for example, user preferences, selections, and schedule availabilities of customers or users at end users **302.** The factors also include, for example, schedule availabilities of charter operators in charter operator subscribers **306.** Logistics processor **336** may perform a cost analysis to identify charter operators within charter operator subscribers 306 to provide potential flight choices. The cost analysis may include, for example, comparing the cost of a flight to the benefit of the flight.

Logistics processor **336** also acts as a cost analysis system capable of determining a cost and benefit for different flights that this component identifies. This component generates a cost analysis that indicates that the cost is too high versus the benefit for a particular charter operator, then aircraft will not be identified for a potential flight choice. The same cost analysis for another charter operator may be identified for a potential flight choice because this charter operator allows for making less profit than the other charter operator.

In these examples, logistic processor **336** generates results from cost analysis in the form of profit in these examples. Of course, in other examples other parameters may be selected in addition to or in place of profit. For example, an identification of whether a particular potential flight choice required maintenance after the flight may be considered. For example, if maintenance is required and the aircraft is out of service on certain dates, the charter operator may not wish to have that aircraft out of service even though the profit level is sufficient to meet their goals. Illustrative analysis algorithms may include, for example, identifying and adding fixed and variable cost drivers. Examples include, without limitation, the hourly operational cost, flight crew cost, landing costs, dispatch cost, and minimum desired operation profit. Other factors also include, for example, discounting agreements in place for situations in which multiple passengers and/or ride sharing are present. The costs and desired profit may be compared to a customer did price for service or may be used to generate an proposed price for the flight. Also, multiple factors may be computed by for evaluation with fixed operational costs and maintenance costs to determine economic viability of offering a flight leg to a customer.

Scheduler interface **324** provides an interface to charter operator **314**; scheduler interface **326** provides an interface to charter operator **316**; and scheduler interface **328** provides an interface to charter operator **318**. These scheduler interfaces are software components that provide interfaces to schedule information from charter operators into charter service **322**.

This information is used to develop an aggregate schedule from which a user or customer may select flights and receive confirmations. The schedule information may include, for example, available seats in charter flights having ride share options in which additional riders may pay for seats on a flight that has already been chartered, which could result in lower costs for each customer, yet yield higher profits for the charter operator. Additionally, these schedule interfaces also provide an interface to receive confirmation from the charter operators when users in end user subscribers **302** select a planned flight for scheduling. A planned flight is a potential flight that has been identified that may be offered to a user for scheduling as a charter flight. Firewall **330** and firewall **332** may be software and/or hardware components that insure data from one charter operator is separated from other charter operators.

Aircraft situation display (ASD) feed **338** is a data input that provides near real time information about the current location and movement of aircraft belonging to charter operator subscribers **306.** In these examples, charter service **322** includes a flight tracking system or process capable of real time monitoring of a status for a plurality of aircraft for multiple charter operators using aircraft situation display (ASD) feed **338.**

In some cases, the information in aircraft situation display (ASD) feed 338 may only be for some of the aircraft for a particular operator. Aircraft situation display (ASD) feed **338** provides information that may be used to track aircraft in a real time manner. Data within aircraft situation display (ASD) feed **338** includes, for example, location, altitude, air speed, destination, estimated time of arrival, or other suitable identifier of an air carrier of an aircraft. These aircraft situation display feeds may be obtained from the Federal Aviation Agency (FAA) for these types of operations. Also, as another example, these types of feeds may be available from various European counties.

User profiles **340** contain information about users in end user subscribers **302**. Charter service **322** includes a passenger and user profile system or process to create and manage user profiles **340.** These profiles are used by charter service **322** to create optimized matches in flights, aircraft, and other services. User profiles **340** are used to refine the potential flight choices identified by logistics processor **336**. Logistics processor **336** may select a portion of the identified potential flight choices based on user profiles **340.** In other embodiments, logistics processor 336 may use user profiles **340** to provide an order for identified potential flight choices. For example, if a user has a particular preference of an aircraft type end user profiles 340, aircraft of that aircraft type may be placed first in identified potential flight choices for the user. Of course, many other types of user preferences may be stored end user profiles **340**, such as, for example, aircraft size, willingness to ride share, and willingness to depart or arrive at another airport within some selected distance from the requested airport.

Charter service **322** stores flights, such as charter flights and open flights in flight database **342**. Flight database **342** contains information about charter flights needed by logistics processor **336** to identify potential flight choices. Information about charter flights and open flights may be received from charter operator subscribers 306 through scheduler interfaces **324, 326**, and **328**. As changes are made, charter operator subscribers **306** send this information to charter service **322** for storage in flight database **342**.

With respect to the type of flights that may be scheduled as charter flights by charter service **322**, agreements or preferences by charter operators within charter operator subscribers **306** may identify what types of flights may be scheduled by charter service **322**.

As a result, information in flight database **342** contains flights from multiple charter operators and may be used to generate potential flight choices for aircraft currently within flight database **342**. This database constantly changes as charter operator subscribers **306** sends changes and end user subscribers **302** makes requests. Flight database **342** also may store information about aircraft and their status

Managed service **344** is a third party service that manages flight operation elements or a charter operator. These services include providing flight plans and maintenance schedules. In this example, managed service **344** provides services to charter operator **320** in charter operator subscribers **306.**

In these examples, contract pilots **346** is a database identifying contract pilots that may be available to fly aircraft for charter operator subscribers **306**. This information includes, for example, identification of pilots, qualifications, and availabilities. In some situations, a contract pilot or other crew may be needed for a charter flight because the current crew may be unable to fly an identified potential flight choice. An example of when this type of situation may occur is when pilots are allowed to fly only some selected number of hours prior to having a mandatory rest time. An identified potential flight choice for an aircraft with the assigned crew may be unavailable if the current pilot is required to fly that potential flight choice. As a result, a contract pilot may be identified from contract pilots **346** to make this flight choice possible.

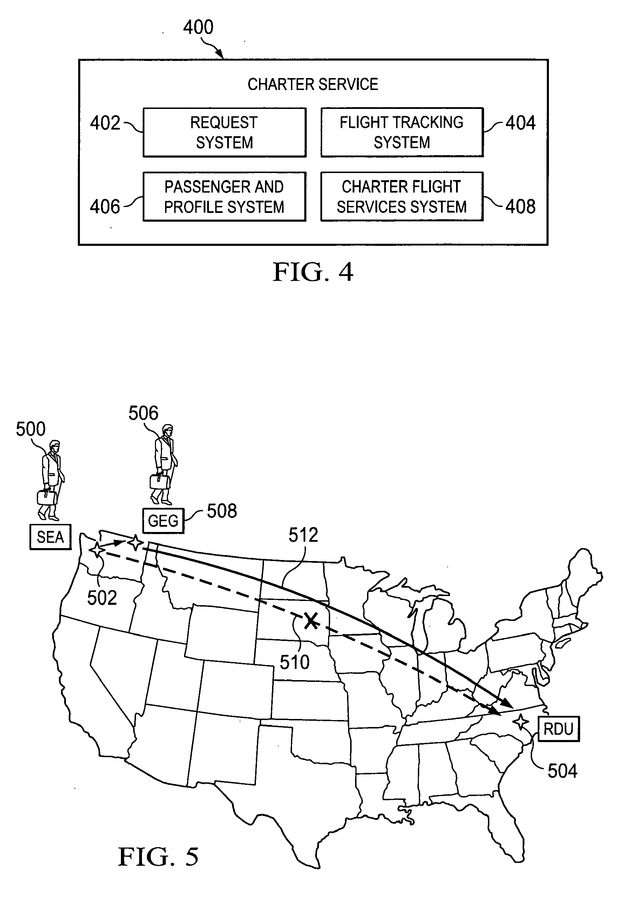

With reference now to **Figure 4**, a diagram of a charter service is depicted in accordance with an advantageous embodiment. In this example, charter service **400** is a more detailed example of charter service **322** in **Figure 3**. In this example, charter service **400** includes request system **402**, flight tracking system **404**, passenger and profile system **406**, and charter flight services system **408**.

Request system **402** is capable of receiving flight requests. In these examples, a request may be received through a user interface, such as user interface **334** in **Figure 3****.** Flight tracking system **404** is capable of real time monitoring of a status for aircraft for multiple charter operators. This tracking and monitoring may be performed using aircraft situation display feeds.

Passenger and profile system **406** is capable of storing user profile preferences. This type of information may be used by logistics processor **336** in **Figure 3** in generating new routes for aircraft present as planned flights for one or more users. Charter flight services system **408** is capable of receiving information about aircraft from multiple charter operators.

This information may include, for example, current charter flights, planned flights, and other information that may be useful for generating planned flights to increase utilization of aircraft for charter operators. This information may be stored and associated with the different charter operators for use in identifying a planned flight.

The components illustrated in **Figure 4** are presented as functional components and not meant to impose architectural limitations on the manner in which charter service **400** may be implemented. In different advantageous embodiments, the different functions and processes described for these components may be combined into fewer components or additional components may be generated.

Turning now to **Figure 5**, a diagram illustrating an operation of a charter flight management environment is depicted in accordance with an advantageous embodiment. In this example, a charter flight has been scheduled to carry passenger **500** from Seattle (SEA) **502** to Raleigh (RDU) **504**. Prior to departure, a request comes from passenger **506** located in Spokane (GEG) **508** who also desires transportation to Raleigh (RDU) **504.** The charter service provider recognizes the potential benefit of a lower per seat charge with two passengers on the flight rather then a single passenger.

In this example, passenger **500** has agreed to allow the aircraft to make a stop at Spokane (GEG) **508** to pick up passenger **506** and then continue to Raleigh (RDU) **504**. As a result, the original planned route for the charter flight along route **510** is canceled and a new route **512** occurs. With this type of situation, passenger **500** has a first right of refusal for the suggested change. However, by accepting the change, the cost to passenger **500** may be reduced.

In this example, passenger **500** and passenger **506** both have a reduced cost in their flights as compared to taking charter flights individually to their destinations. As a further benefit, the charter operator is able to increase revenues by increasing the number of seats occupied in its aircraft. The altering of the flight schedule to use route **512** instead of route **510** is accomplished in these examples using charter flight management environment **300** in **Figure 3****.**

In this example, passenger **500** may log on to charter service **322** in **Figure 3** through user interface **334** in **Figure 3** to request potential flight choices from Seattle (SEA) **502** to Raleigh (RDU) **504**. If passenger **500** is a first time user of charter flight management environment **300** in **Figure 3**, passenger **500** establishes a user profile. This user profile may include, for example, name, address, payment preferences, and default preferences for flights. This type of information is used to establish a user profile, such as end user profiles **340** of **Figure 3** for passenger **506**.

Thereafter, passenger 506 enters information about the desired flight. This information may include, for example, departure airport, departure time, or a window of time for departure, arrival airport, desired arrival time or window of time, or any other parameters needed for the flight.

Further, as part of making the request through user interface **334** in **Figure 3**, passenger **500** may override some or all of the default preferences set up in the user profile. For example, in the case of an emergency trip, passenger **506** may be less picky about the type of aircraft, catering preferences, and ride sharing.

This request is received by charter service **322** in **Figure 3**, which may identify charter flights that may have open seats for ride sharing along with flights that may already be in route. In addition, opportunities for repositioning aircraft may be considered in identifying potential flight choices for passenger **500**. A re-positioning of an aircraft involves moving an aircraft to an unplanned location to take advantage of a fare. This type of re-positioning may occur if the fare for passenger **500** has a benefit that outweighs the cost of moving the aircraft. This type of potential flight identification is performed using logistics processor **336** in **Figure 3**. Buffers or ranges are considered in identifying potential flight choices by logistics processor **336** in **Figure 3**.

For example, a preset maximum number of deviations to request pick up and drop off times, location airport distance from departure and arrival locations selected by passenger **500** are examples of parameters that may be considered by logistics processor **336** in generating potential flight choices for passenger **500**.

The identified potential flight choices are presented to passenger **500** by charter service **322** through user interface **334** in **Figure 3**. Passenger **500** may then select a potential flight choice from a set of potential flight choices presented. Passenger **500** is presented with a set of planned flights. These planned flights are non-guaranteed offerings, meaning that in the time needed to make the selection, the flight may have changed or become unavailable due to other users making commitment requests.

Further, in these examples the charter operator also makes a commitment to serve the customer with the flight. Of course in other embodiments, the charter operator may already provide charter service **322** with commitments for certain types of flights or aircraft that do not have to be confirmed. As a result, passenger **500** confirms the planned flight along route 510, this planned flight is then sent to a charter operator of the aircraft for confirmation of the availability of the selected planned flight. In this example, the selection and confirmation is made with charter operator **314** through scheduler interface **324** in **Figure 3**.

When a confirmation occurs, passenger **500** receives identification through user interface **334** in **Figure 3** and may then complete scheduling of the charter flight. This scheduling may also include a payment or arrangement for payment of the flight.

Subsequently, passenger **506** may request a flight from Spokane (GEG) **508** to Raleigh (RDU) **504** in identifying potential flight choices to present to passenger **506** as planned flights. The flight with passenger 500 is then identified for potential re-positioning. Further, passenger **500** has indicated that ride sharing is acceptable.

When passenger **506** selects route **512**, passenger **500** is contacted to determine whether the re-positioning is acceptable. In some embodiments, consulting passenger **500** may be unnecessary, but in most cases request for permission is obtained. Additionally, this request also may include a negotiated fee for passenger **500** to reduce the fare with a detour through Spokane (GEG) **508** using route **512** instead of route **510**.

If passenger **500** agrees to the change, passenger **506** is notified of the change through user interface **334** in **Figure 3** and schedules the planned flight to become a charter flight. This scheduling may include, for example, arranging for payment for the flight. In these examples, payment by passenger **500** and **506** may be electronic payments, such as, for example, credit cards or electronic fund transfers.

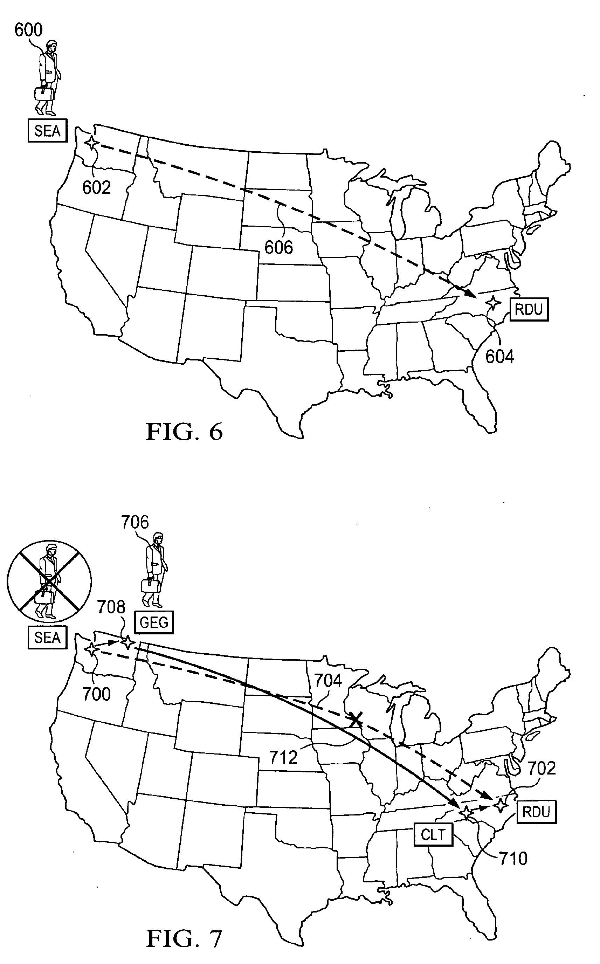

Turning now to **Figure 6**, a diagram illustrating processing of a charter flight using a charter flight management environment is depicted in accordance with an advantageous embodiment. In this example, passenger 600 is a subscriber in end user subscribers **302** for charter flight management environment **300** in **Figure 3**.

Passenger **600** desires to travel from Seattle (SEA) **602** to Raleigh (RDU) **604**. In response to this request, charter service **322** invokes logistics processor **336** to identify potential flight choices that may be presented as planned flights to passenger **600**. Passenger **600** is provided with a prioritized list of choices from different charter operators in charter operator subscribers **306** based on results received from logistics processor **336** in **Figure 3**. Based on the user request and preferences. The planned flights may include information, such as departure airport, departure time, type of aircraft, services available on the flight, price, and other suitable information.

Passenger **600** then selects a particular flight, such as a flight from Seattle (SEA) **602** to Raleigh (RDU) **604** using route **606**. In this example, route **606** is a deadhead leg or open flight in which the aircraft is returning from a prior charter flight to its base location without any passengers.

This request is then sent to a charter operator, such as charter operator **314** in **Figure 3** for confirmation. When charter operator **314** in **Figure 3** returns a confirmation of availability to charter service **322** in **Figure 3**, charter service **322** in **Figure 3** then notifies passenger **600** and schedules payment. Alternatively, a payment may be scheduled directly between user **602** and charter operator **314** in **Figure 3**. Charter operator **314** in **Figure 3** then provides itinerary and other information to user **600**.

With reference now to **Figure 7**, an example of minor re-positioning to schedule a charter flight is depicted in accordance with an advantageous embodiment. In this example, charter operator **314** in **Figure 3** has planned an open flight from Seattle (SEA) **700** to Raleigh (RDU) **702** along route **704.** This information is stored in flight database **342** in **Figure 3**.

In this example, passenger **706** has made a request to charter service **322** for a charter flight from Spokane (GEG) **708** to Charlotte (CLT) **710** along route **712**. Logistics processor **336** in Figure 3 identifies the planned open flight along route **704**. In performing cost analysis, logistics processor **336** determines that the benefit of passenger **706** paying a fare and then re-positioning the aircraft from Seattle (SEA) **700** to Spokane (GEG) **708** along with a further repositioning from Charlotte (CLT) **710** to Raleigh (RDU) **702** outweighs the costs of using the planned open flight route **704**. As a result, a planned flight along route **712** is presented to user **706**.

In this example, user **706** selects this particular route, resulting in a request for confirmation being sent to charter operator **314** in **Figure 3**. Charter operator **314** in **Figure 3** confirms the request. Charter operator 314 in **Figure 3** receives or arranges for payment from user **706** and schedules the planned flight to form a charter flight.

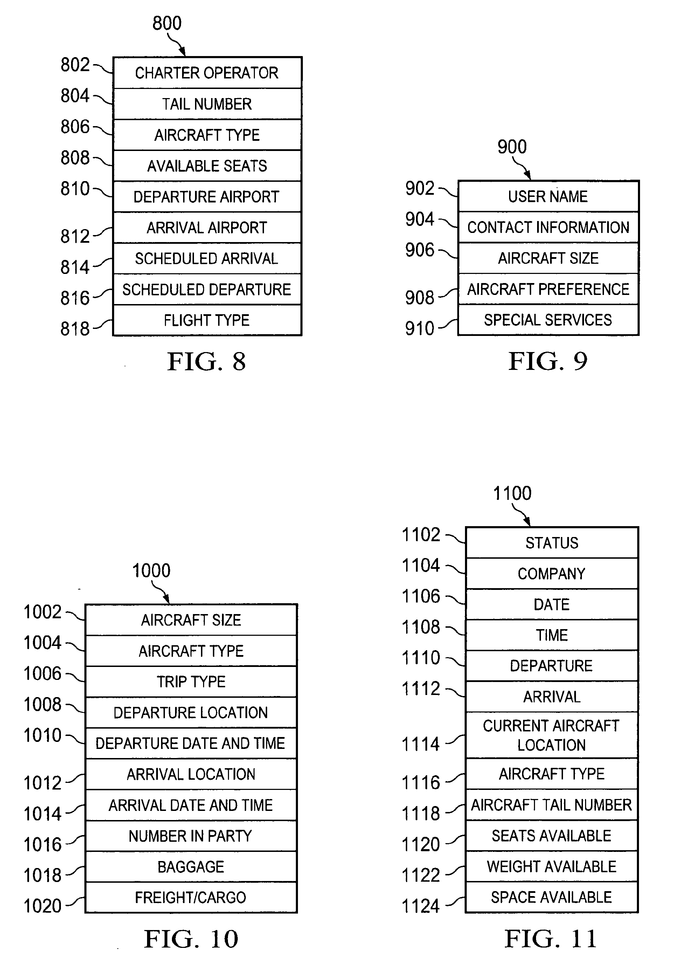

Turning next to **Figure 8**, a diagram of a record in a flight database is depicted in accordance with an advantageous embodiment. Record **800** is an example of a record that may be found in flight database **342** and charter flight management environment **300** in **Figure 3**. Record **800** is created for different types of flights within flight database **342**. These flights include, for example, charter flights, open flights, and planned flights. In this example, record **800** includes charter operator **802**, tail number **804**, aircraft type **806**, available seats 808, departure airport **810**, arrival airport **812**, scheduled arrival **814**, scheduled departure **816**, and flight type **818**.

Charter operator **802** identifies the charter operator for the flight. Tail number **804** identifies the particular aircraft. The tail number provides a unique identifier for an aircraft. This identifier may be unique for the particular charter operator. The aircraft type identifies the type of aircraft. The aircraft type may be, for example, Gulfstream, Falcon, or Cessna.

Available seats **808** identifies numerous seats that are not taken on the aircraft and that may be available for options, such as ride sharing. If the flight is an open flight, the number of available seats identifies the total number of seats that are present in the aircraft.

Departure airport **810** identifies the airport from which the flight leaves and arrival airport **812** identifies the airport at which the flight arrives for the flight. Scheduled arrival time **814** and scheduled departure time **816** identify times for arrival and departure. Flight type **818** identifies the type of flight in the database. The flight may be, in these examples, an open flight, a charter flight, or a planned flight. An open flight is a flight in which no passengers are scheduled. An open flight may be, for example, a deadhead leg. A charter flight is a flight in which fare paying passengers are present. A planned flight is a flight that may be scheduled upon selection by a user with confirmation by a charter operator in these examples.

Other information may be included in addition to or place of the information identified in reference **800**. For example, an identification of special services associated with the flight also may be included. These special services may include, catering, lodging, transportation, and other personal services.

Turning now to **Figure 9**, a diagram of record for a user profile is depicted in accordance with an advantageous embodiment. Record **900** is an example of a record that may be found in end user profiles **340** in **Figure 3**. In this example, record **900** includes user name **902**, contact information **904**, aircraft size **906,** and aircraft preference **908**, and special services **910**. User name **902** is the user's login name in these examples. Contact information **904** includes the user's actual name, address, phone number, email, and any other contact information.

Aircraft size **906** identifies the user's preference for a particular size aircraft. An aircraft size may be, for example, full size, super mid size, mid size, light jet, very light jet, personal jet, or turbo prop. Aircraft preference **908** identifies a type of aircraft. The aircraft preference may be, for example, Gulfstream, Falcon, Lear, Cessna, Bombardier, or no preference at all. Special services **910** specifies services that the user may desire, such as catering, lodging, transportation, or other special services.

In **Figure 10**, a record illustrating an example of information that may be entered by a user requesting a flight is depicted in accordance with an advantageous embodiment. In this example, record **1000** is an example of a record that may be created by a user through user interface **334** and requesting service through charter service **322** in **Figure 3****.** Record **1000** includes aircraft size **1002,** aircraft type **1004**, trip type **1006**, departure location **1008**, departure date and time **1010**, arrival location **1012**, arrival date and time **1014**, number in party **1016**, baggage **1018**, and space and cargo **1020**.

Aircraft size **1002** identifies the size of the aircraft and aircraft type **1004** identifies the particular type of manufacturer of the aircraft. Trip type **1006** is used to identify the type of trip. A trip type may be, for example, a one way trip, a round trip, or a trip with multiple locations.

Departure location **1008** and departure date and time **1010** identify departure information, while arrival location **1012** and arrival date and time **1014** identify arrival information for a desired flight. Number in party **1016** identifies the number of passengers that are planned for traveling.

Baggage **1018** identifies the baggage that may be carried. This baggage may include, for example, the number of pieces of baggage, as well as the average weight or total weight of the baggage. Freight/cargo **1020** identifies whether freight and cargo is to be carried. Freight/cargo **1020** may include the number of pieces of cargo, as well as the average weight and total weight of the cargo. Additionally, freight/cargo **1020** also may include the amount of space that the cargo takes up. Freight/cargo **1020** may be used for finding a charter flight to carry cargo. The freight and cargo may be carried without passengers or with passengers.

With reference now to **Figure 11**, a diagram of a record comprising aircraft information is depicted in accordance with an advantageous embodiment. Record **1100** is an example of a record that may be stored in flight database **342** in **Figure 3** for use in generating potential flight choices. Record **1100** contains information about an aircraft that may be scheduled for a flight using charter flight management environment **300** in **Figure 3**. Record **1100** includes status **1102**, company **1104**, date **1106**, time **1108**, departure **1110**, arrival **1112**, current aircraft location **1114**, aircraft type **1116**, aircraft tail number **1118**, seats available **1120**, weight available **1122**, and space available **1124**.

Status **1102** identifies the status of the aircraft. The aircraft may be, for example, available, in flight, chartered, or in maintenance. Company **1104** identifies the charter operator for the aircraft. Date **1106** and time **1108** identify arrival and departure times for any current flights that may be chartered for the aircraft. Departure **1110** identifies the departure location for the aircraft, and arrival **1112** identifies the arrival location for the aircraft. Current aircraft location **1114** identifies the current location of the aircraft. This aircraft may be located on the ground, at a particular airport, or the aircraft may be in flight. If the aircraft is in flight, the current aircraft location identifies the location of the aircraft in its route.

Aircraft type **1116** identifies the manufacturer of the aircraft in these examples. Aircraft tail number **1118** is a unique identifier for identifying a particular aircraft. Seats available **1120** identifies seats that may be available on the aircraft or the total number of seats present in the aircraft. Weight available **1122** identifies the amount of weight that the aircraft can carry or the amount of the remaining weight that the aircraft can carry. Space available **1124** may identify the amount of space available for cargo.

The different records illustrated in **Figures 8-11** are presented for purposes of depicting one manner in which information may be stored. Of course, other fields may be used in addition to or in place of fields in the particular examples. The particular information and arrangement of fields in each type of record will vary depending on the particular implementation.

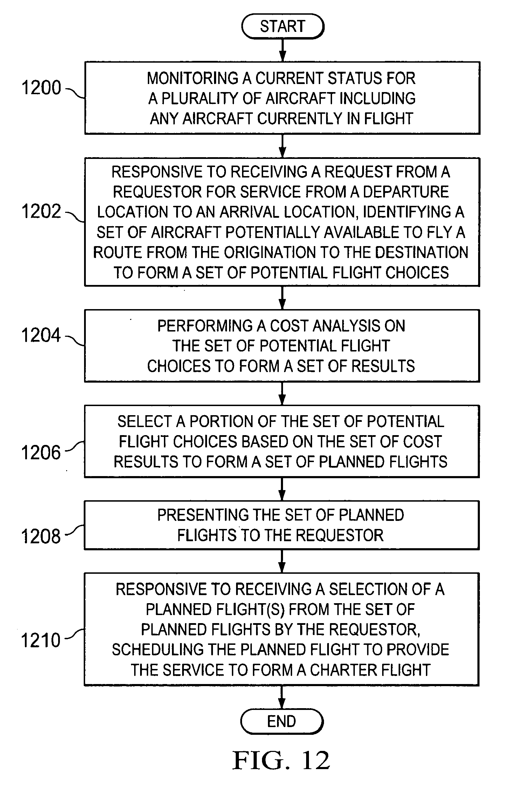

Turning now to **Figure 12**, a high level flowchart of a process for managing charter flights is depicted in accordance with an advantageous embodiment. The process illustrated in **Figure 12** may be implemented in charter flight management environment **300** in **Figure 3**. In particular, the different processes illustrated in **Figure 12** may be implemented in service components **304** in **Figure 3**.

The process begins by monitoring the current status for a plurality of aircraft, including any aircraft currently in flight (operation **1200**). In operation **1200**, information may be received from various charter operators through a scheduler interface. Additionally, information about aircraft currently in flight may be received through aircraft situation display feeds.

In response to receiving a request from a requester for service from a departure location to an arrival location, a set of aircraft potentially available to fly a route from the origination to the destination is identified to form a set of potential flight choices. The request may be received from end user subscribers **302** through user interface **334** in **Figure 3**.

The process then performs a cost analysis of the set of potential flight choices to form a set of results (operation **1204**). The process selects a portion of the set of potential flight choices based on a set of cost results to form a set of planned flights (operation **1206**). The set of planned flights are then presented to the requester (operation **1208**). These planned flights are presented through user interface **334** in **Figure 3** in these examples.

In response to receiving a selection of a planned flight from a set of planned flights by the requester, the planned flight is scheduled to provide service to form a charter flight (operation **1210**) with the process terminating thereafter. In operation **1210**, the charter operator may be notified that the user has selected a particular planned flight. The charter operator may then confirm that flight to form a charter flight. This confirmation may include, for example, an exchanging or arrangement for payment between the requester and the charter operator. This arrangement for payment in the example does not involve service components **304** in **Figure 3**.

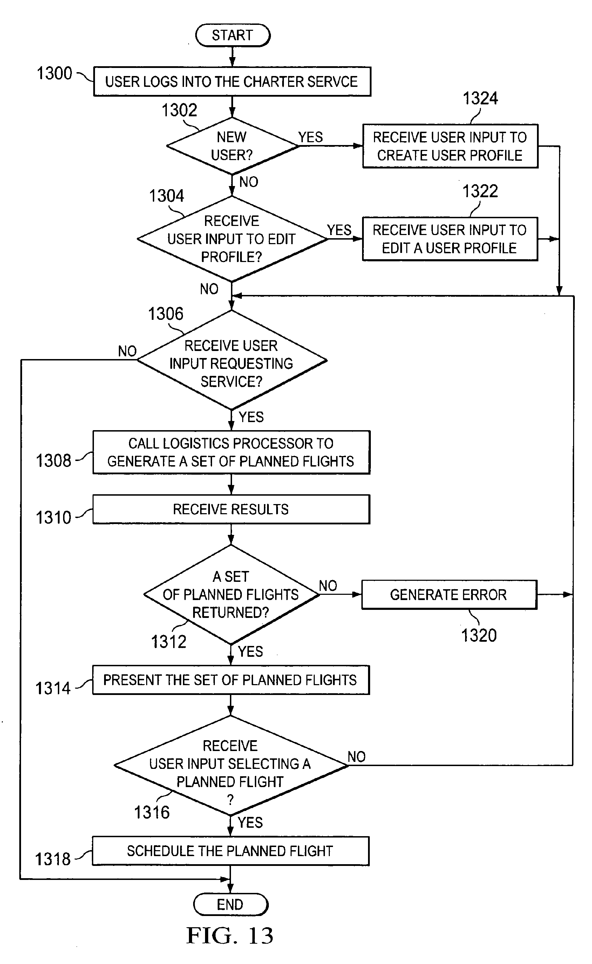

Turning now to **Figure 13**, a flowchart of a process for requesting a flight is depicted in accordance with an advantageous embodiment. The process illustrated in **Figure 13** may be implemented in a software component, such as charter service **322** in **Figure 3**. In particular, the information may be exchanged between charter service **322** and requesters or users through user interface **334** in **Figure 3**.

The process begins with a user logging into the charter service (operation **1300**). Thereafter, a determination is made as to whether the user is a new user (operation **1302**). If the user is not a new user, a determination is made as to whether the user has decided to edit a user profile for the user (operation **1304**).

If the user has decided not to edit the user profile, a determination is made as to whether the user input has been received requesting service (operation **1306**). If the user has entered user input requesting service, the process calls a logistics processor to generate a set of planned flights (operation **1308**). In this example, the user input in operation **1306** may include information about a flight that the user wishes to charter. In operation **1308**, the call to the logistics processor includes this information. The process then receives results from the logistics processor (operation **1310**).

Thereafter, a determination is made as to whether a set of planned flight is returned in the results (operation **1312**). If a set of planned flights is returned, then a set of planned flights are presented to the user (operation **1314**). A determination is then made as to whether the user input has been received selecting a planned flight (operation **1316**). If the user input has been received selecting the planned flight, the process then schedules the planned flight (operation **1318**) with the process terminating thereafter. In operation **1318**, a number of steps may occur involving notifying the charter operating and receiving confirmation for the flight.

With reference again to operation **1316**, if the user has not selected a planned flight from the set of planned flights, the processor returns to operation **1306** as described above. In this case, the user may not have found any flights that the user wanted to charter. As a result, the user may then re-request service with different preferences. In operation **1306**, if the user input does not request service, then the process terminates.

With reference again to operation **1312**, if the results received do not include a set of planned flights then the results indicate that no flights meet the user's request. The process then generates an error (operation **1320**) and returns to operation **1306** as described above. The error in these examples is an error message presented to the user indicating that no flights have been returned meeting the request.

With reference again to operation **1304**, if the user has decided to edit the properties, the process receives user input to modify the user profile (operation **1322**) with the process proceeding to operation **1306** as described above. In this instance, the user may desire to change certain preferences or contact information. Referring back to operation **1302**, if the user is a new user, the process receives user input to create a user profile (operation **1324**) with the process then proceeding to operation **1306** as described above. With reference again to operation **1306**, if the user does not request service, the process terminates.

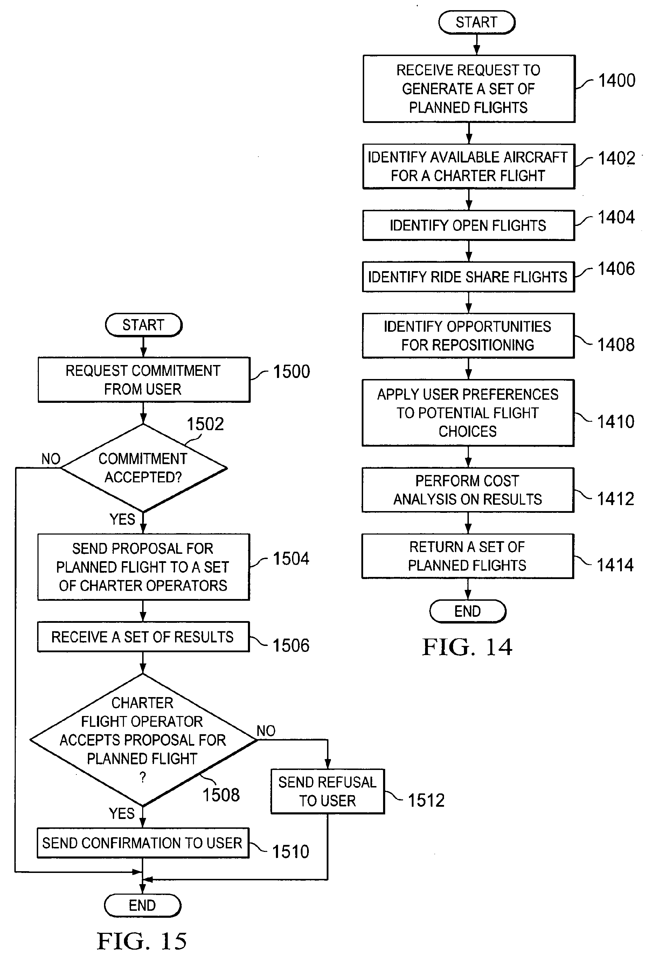

With reference now to **Figure 14**, a flowchart of a process for identifying potential flight choices to generate a set of planned flights is depicted in accordance with an advantageous embodiment. The process illustrated in **Figure 14** may be implemented in charter flight management environment **300** in **Figure 3**. In particular, this process may be implemented in logistics processor **336** in **Figure 3**.

The process begins by receiving a request to generate a set of planned flights (operation **1400**). In these examples, a request is received by logistics processor **336** from charter service **322** in **Figure 3**. The process identifies available aircraft for a charter flight (operation **1402**). This identification may be made using information in flight database **342** in **Figure 3**.

Aircraft that are available may be identified by locating aircraft present in the departure and arrival airports at the date and times or within a window of the date and times as requested by the requester.

Additionally, the available aircraft may be identified based on the distance that a user is willing to travel from the arrival and destination locations. Other information that may be taken into account in identifying available aircraft includes, for example, potential re-positioning of the aircraft from one location to another location. The process then identifies any open flights that are present (operation **1404**).

The process also identifies ride share flights that may be available (operation **1406**). Ride share flights are charter flights that have seats available in which users of those flights are agreeable to sharing those seats with other users. The process also identifies opportunities for re-positioning (operation **1408**). In identifying aircraft that may be re-positioned from one location to another location to schedule a flight, the process may include buffers or thresholds.

For example, re-positioning may be performed, but only for aircraft within a certain distance or location of the departure and arrival locations based on the dates and windows identified by a user. The process then applies user preferences to the potential flight choices (operation **1410**). In operation **1410**, user preferences may be used to eliminate potential flight choices or provide an order in which potential flight choices are to be presented as planned flights.

The process then performs a cost analysis on results (operation **1412**). The cost analysis includes, for example, determining whether the cost for re-positioning aircraft out weighs the benefit of obtaining the additional fare. Also, the cost analysis may include other factors, such as maintenance factors. For example, if a planned flight causes maintenance to be required at a time when the charter operator must have the aircraft for some other flight or operation, then the benefit does not out weigh the cost.

Further, in forming the cost analysis, certain airlines may require a certain amount of profitability before scheduling a charter flight. As a result, one charter operator may accept one flight while another charter operator may refuse the same flight under the same conditions based on different levels of profitability desired by the charter operators.

The process then returns a set of planned flights (operation **1414**) with the process terminating thereafter. These set of planned flights is a result returned to charter service **322** for presentation to a user.

With reference now to **Figure 15**, a flowchart of a process for scheduling a selected planned flight is depicted in accordance with an advantageous embodiment. The process illustrated in **Figure 15** is a more detailed example of operation **1318** in **Figure 13**.

The process begins by requesting a commitment from the user for the selected planned flight (operation **1500**). A determination is then made as to whether the user has accepted the request for the commitment (operation **1502**). If the user has accepted the request for commitment, then the process sends a proposal for the planned flight to a set of one or more charter operators (operation **1504**). In operation **1504**, charter service **322** in **Figure 3** may send the proposal to a set of charter operators, such as charter operator **314** through scheduler interface **324** in **Figure 3**.

The process then receives a set of results from a charter operator (operation **1506**). A determination is made as to whether the charter operator accepts the proposal for the planned flight (operation **1508**).

If the charter operator accepts the proposal, then a confirmation is sent to the user (operation **1510**) with the process terminating thereafter. At this point, the user and charter operator may make arrangements for any changes in the status of a planned flight to a charter flight that may be received by charter service **334** in **Figure 3** through scheduler interface **324** in **Figure 3** from charter operation **314** in **Figure 3** after the payment and arrangements have been made between the user and charter operator **314** in **Figure 3**.

With reference again to operation **1508**, if the charter operator does not accept the proposal, then the process sends the refusal to the user (operation 1512) with the process terminating thereafter. At this point, the user may reinitiate the process in **Figure 13** to select another flight. With reference again to operation **1502**, if the user does not accept the request for commitment, the process terminates.

The flowcharts and block diagrams in the different depicted embodiments illustrate the architecture, functionality, and operation of some possible implementations of apparatus, methods and computer program products. In this regard, each block in the flowchart or block diagrams may represent a module, segment, or portion of computer usable or readable program code, which comprises one or more executable instructions for implementing the specified function or functions. In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved.

Thus, the different advantageous embodiments provide a computer implemented method, apparatus, and computer program code for managing charter flights. In the different advantageous embodiments, a current status for aircraft is monitored including any aircraft in flight. In response to receiving a request from a requester for service, a set of aircraft potentially available to fly a route from the departure location to the arrival location is identified to perform a set of potential flight choices. A cost analysis is performed on the set of potential flight choices to form a set of cost results. A portion of the set of potential flight choices is selected based on the set of cost results to form a set of planned flights. These planned flights are then presented to the requester.

The requester may select from the presented planned flights. Upon selection of a flight, a confirmation is obtained from the charter operator in these examples. In other examples, confirmations may be unnecessary depending on the arrangements between the charter operator and the service. As a result, the different advantageous embodiments are able to manage flights for charter operators by identifying potential flights that may be generated based on user inputs. In the different advantageous embodiments, the monitoring of flights and aircrafts are for a number of different charter operators. As a result, the offering of flights may be considerably greater then what is currently available when users contact individual charter operators.

Further, the use of information about the actual aircraft positions in real time also provides an ability to more accurately identify the locations of aircraft and provide higher utilization of aircraft for both customers and charter operators. The environment provided by the different advantageous embodiments allow for an aggregation of charter operators in offering or identifying planned flights to offer to users. In this manner, increased options and flexibility is present for customers wanting to charter flights. Also, by allowing for an ability to increase utilization of charter aircraft, charter operators are able to offer lower prices, encourage more use of charter flights.

Further, the different advantageous embodiments aid charter operators and their aircraft in the air rather than on the ground. Additionally, the different embodiments may help put customers on what otherwise would be empty legs as well as increase load factors. In other words, in addition to reducing empty legs, the different advantageous embodiments also help fill up more seats on a given leg, through the shared bringing together of single-seat on-demand customers contrasted to one or a few customers renting an entire plane with numerous empty seats.

Still further, the different identifications of aircraft to generate planned flights and cost analysis include considering multiple charter operators resulting in more options for users. By the ability to use contract pilots more planned flight options may be made available because of asset availability. These and other features, benefits, and/or advantages may be found in one or more of the advantageous embodiments.

The different advantageous embodiments can take the form of an entirely hardware embodiment, an entirely software embodiment, or an embodiment containing both hardware and software elements. Some embodiments are implemented in software, which includes but is not limited to forms, such as, for example, firmware, resident software, and microcode.

Furthermore, the different embodiments can take the form of a computer program product accessible from a computer-usable or computer-readable medium providing program code for use by or in connection with a computer or any device or system that executes instructions. For the purposes of this disclosure, a computer-usable or computer readable medium can generally be any tangible apparatus that can contain, store, communicate, propagate, or transport the program for use by or in connection with the instruction execution system, apparatus, or device.

The computer usable or computer readable medium can be, for example, without limitation an electronic, magnetic, optical, electromagnetic, infrared, or semiconductor system, or a propagation medium. Non limiting examples of a computer-readable medium include a semiconductor or solid state memory, magnetic tape, a removable computer diskette, a random access memory (RAM), a read-only memory (ROM), a rigid magnetic disk, and an optical disk. Optical disks may include compact disk - read only memory (CD-ROM), compact disk - read/write (CD-R/W) and DVD.

Further, a computer-usable or computer-readable medium may contain or store a computer readable or usable program code such that when the computer readable or usable program code is executed on a computer, the execution of this computer readable or usable program code causes the computer to transmit another computer readable or usable program code over a communications link. This communications link may use a medium that is, for example without limitation, physical or wireless.

A data processing system suitable for storing and/or executing computer readable or computer usable program code will include one or more processors coupled directly or indirectly to memory elements through a communications fabric, such as a system bus. The memory elements may include local memory employed during actual execution of the program code, bulk storage, and cache memories which provide temporary storage of at least some computer readable or computer usable program code to reduce the number of times code may be retrieved from bulk storage during execution of the code.

Input/output or I/O devices can be coupled to the system either directly or through intervening I/O controllers. These devices may include, for example, without limitation to keyboards, touch screen displays, and pointing devices. Different communications adapters may also be coupled to the system to enable the data processing system to become coupled to other data processing systems or remote printers or storage devices through intervening private or public networks. Non-limiting examples are modems and network adapters are just a few of the currently available types of communications adapters.

The description of the different advantageous embodiments has been presented for purposes of illustration and description, and is not intended to be exhaustive or limited to the embodiments in the form disclosed. Many modifications and variations will be apparent to those of ordinary skill in the art. Further, different advantageous embodiments may provide different advantages as compared to other advantageous embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An apparatus for managing charter flights, the apparatus comprising:
a request system capable of receiving flight requests;
a flight tracking system capable of real time monitoring of a status for a plurality of aircraft for multiple charter operators;
a route generator capable of generating a set of new routes for portion of the plurality of aircraft based on current aircraft status and a set of received flight requests to form a set of generated routes; and
a cost analysis system capable of determining a cost and benefit for each of the set of generated routes.

2. The apparatus of claim 1, wherein the flight tracking system is capable of monitoring a status of in-flight aircraft.

3. The apparatus of claim 1, wherein the cost analysis unit is capable of determining the cost status for each of the set of generated routes based on at least one of fuel cost, revenue, and weather.

4. The apparatus of claim 1, wherein the route generator is capable of generating a next route for an aircraft in the plurality of aircraft that is currently in-flight.

5. The apparatus of claim 1 further comprising:
a passenger and user profile system capable of storing a user profile of preferences, wherein the route generator generates the set of new routes for the portion of the plurality of aircraft based on current aircraft status, a set of received flight requests, and the user profile to form a set of generated routes.

6. The apparatus of claim 1 further comprising:
a charter flight supplier services system capable of receiving information about a plurality of aircraft from a the multiple charter operators, associating each of the set of aircraft with a charter operator in the multiple charter operators, and providing the set of generated routes and a set of associated costs and benefit status for the aircraft associated with the charter operator to the charter operator.

7. The apparatus of claim 1, wherein the route generator is capable of generating a new route from an empty leg.

8. The apparatus of claim 1 further comprising:
a scheduler interface capable of receiving status information for the plurality of aircraft from a plurality of charter operators.

9. A computer implemented method for managing charter flights, the computer implemented method comprising:
monitoring a current status for a plurality of aircraft including any aircraft currently in-flight;
responsive to receiving a request from a requestor for service from a departure location to a arrival location, identifying a set of flights from the departure location to the arrival location using the current status of the plurality of aircraft from multiple charter operators to form a set of potential flight choices;
performing a cost analysis on the set of potential flight choices to form a set of cost results;
selecting a portion of the set of potential flight choices based on the set of cost results to form a set of planned flights; and
presenting the set of planned flights to the requestor.

10. The computer implemented method of claim 9 further comprising:
responsive to receiving a selection of a planned flight from the set of planned flights by the requestor, scheduling the planned flight to provide the service to form a charter flight.

11. The computer implemented method of claim 9, wherein the selecting step comprises:
comparing the set of cost results to a policy to form a comparison; and
selecting the portion of the potential flight sources based on the comparison.

12. The computer implemented method of claim 9, wherein the performing step comprises:
performing a cost and benefit analysis for each potential flight choice in the set of potential flight choices to form a cost result for the set of cost results.

13. The computer implemented method of claim 9, wherein the selecting step further comprises:
selecting a portion of the set of potential flight choices based on the set of cost results and on a set of user preferences of a requestor of the service.
